# FASCICULE DE BREVET EUROPEEN

(11) **EP 3 063 089 B1**
(45) Date de publication et mention de la délivrance du brevet: **02.08.2017**
(21) Numéro de dépôt: 14796233.6
(22) Date de dépôt: 16.10.2014
(51) Int. Cl.: B67D 7/82, F16L 53/00, B67D 7/02

(54) **SYSTEME DE CHAUFFAGE D'UN DISTRIBUTEUR D'UREE**
HEIZSYSTEM FÜR EINEN HARNSTOFFSPENDER
HEATING SYSTEM FOR A UREA DISPENSER

(30) Priorité: 31.10.2013 FR 1360699
(43) Date de publication de la demande: 07.09.2016
(73) Titulaire: Tokheim Holding B.V., 5531 AD Bladel (NL)
(72) Inventeur: MCCLELLAND, David, Carnoustie Angus DD7 7RA (GB)
(74) Mandataire: Jacobacci Coralis Harle
(86) Numéro de dépôt international: PCT/FR2014/052637
(87) Numéro de publication internationale: WO 2015/063387

(56) Documents cités:
- WO-A1-2013/159030
- WO-A2-2012/103437
- DE-U1-202011 100 991
- DE-U1-202013 006 358

## Description

La présente invention a pour objet un distributeur de liquide destiné à des véhicules tels des camions ou des automobiles à moteur diesel et un procédé mis en oeuvre lors du fonctionnement d'un tel distributeur de liquide.

L'invention concerne plus particulièrement un distributeur de liquide à base d'urée en solution dans de l'eau.

Les véhicules à moteur diesel sont fréquemment équipés d'un turbocompresseur de suralimentation.

L'adjonction d'un turbocompresseur de suralimentation dans un moteur diesel permet d'améliorer la combustion en accroissant la quantité d'oxygène fournie et par suite d'augmenter sensiblement la puissance de ce moteur.

Une telle adjonction entraîne toutefois l'introduction dans le moteur, en plus de l'oxygène, d'une quantité importante d'azote qui est oxydée lors de la combustion. Il en résulte une émission accrue d'oxydes d'azote NOₓ qui sont particulièrement nocifs pour l'environnement dans les gaz d'échappement du moteur.

Or, l'écologie devient peu à peu l'une des préoccupations principales de la plupart des gouvernements et, pour préserver l'environnement, les véhicules et à commencer par les poids lourds, doivent respecter des normes antipollution de plus en plus sévères qui les obligent à réduire leurs émissions d'oxydes d'azote NOₓ.

Dans ce but, il a déjà été proposé d'injecter un additif antipollution à base d'ammoniac dans le pot catalytique classiquement positionné à la sortie de l'échappement d'un moteur pour convertir les oxydes NOₓ émis en azote et en vapeur d'eau qui sont des composants non polluants.

Cet additif antipollution à base d'ammoniac agissant comme un réducteur est stocké et mis en oeuvre sous la forme d'une solution aqueuse d'urée qui est un produit non toxique, non explosif et non dangereux.

L'additif antipollution est communément appelé AUS32 (« Aqueous Urea Solution » ou solution aqueuse d'urée) en Europe.

Les professionnels le commercialisent actuellement sous la dénomination commerciale AdBlue®. Cet additif antipollution liquide est constitué par une solution aqueuse renfermant 32,5 % d'urée et 67,5 % d'eau et est destiné à être directement injecté dans le pot catalytique d'un véhicule pour réduire les oxydes d'azote NOₓ. Il s'agit là de la technologique dite SCR ("sélective Catalytic Reduction" ou réduction catalytique sélective) qui permet de retraiter les gaz d'échappement des véhicules utilitaires en convertissant environ 85 % des oxydes d'azote NOₓ en azote et en vapeur d'eau.

De nombreux camions à moteur diesel comportent un réservoir spécifique à additif antipollution (AdBlue®) qui est associé à un circuit permettant l'injection de cet additif dans le pot catalytique SCR.

Pour ravitailler ces réservoirs, des stations-services sont équipées d'installations de distribution d'AUS32 permettant de remplir le réservoir spécifique d'un véhicule. Ces distributeurs peuvent notamment être associés à des distributeurs de carburants.

De telles installations comportent une cuve de stockage de l'additif antipollution, un distributeur relié à cette cuve de stockage par une conduite de distribution et une pompe. Le distributeur comprend des organes de mesure, de calcul et d'affichage de la quantité d'additif antipollution distribuée, et un tuyau flexible.

Ce tuyau flexible est muni à son extrémité libre d'un pistolet permettant de transférer un volume déterminé d'additif antipollution dans le réservoir spécifique d'un véhicule, à l'identique du processus pour la distribution de carburant.

Le distributeur d'additif antipollution comporte en règle générale un compartiment hydraulique à sa partie inférieure renfermant un circuit de distribution de liquide et le mesureur et un compartiment électronique à sa partie supérieure renfermant le calculateur et les organes d'affichage.

Le transfert du produit de la cuve au mesureur se fait soit par une pompe immergée dans la cuve de stockage de l'additif qui peut être aérienne ou souterraine, soit par une pompe par aspiration généralement installée dans le compartiment hydraulique.

Malgré les avantages susmentionnés, cette technologie n'est pas sans inconvénients dans la mesure où l'additif à base d'urée commence à se cristalliser à -7°C et se solidifie à -11°C, ce qui peut entraîner d'importants problèmes par temps froid.

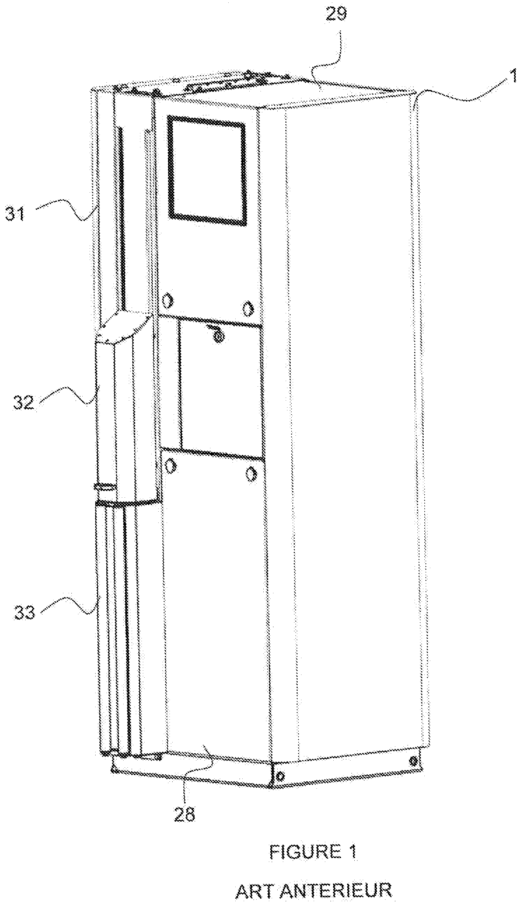

Pour remédier à cet inconvénient, il existe des distributeurs d'additif à base d'urée, comme représenté sur la figure 1, dont le distributeur comporte un compartiment de stockage du tuyau flexible ainsi que du pistolet distributeur, fermé par une porte de protection et qui est équipé d'un système de réchauffage de l'additif antipollution à sa partie interne.

Un tel distributeur est toutefois particulièrement sophistiqué et onéreux. Lorsque les utilisateurs ont terminé l'opération de livraison d'additif, ils ne remettent pas toujours la porte en place ou la vandalisent pour qu'elle reste ouverte. Le réchauffage du pistolet n'est alors pas assuré.

De plus, pour pouvoir être logé dans le compartiment fermé du distributeur, le tuyau flexible ne peut pas avoir une longueur supérieure à 5 mètres, ce qui constitue une gêne lors du remplissage du réservoir des camions qui peut s'étendre de part et d'autre de leur largeur.

En effet, un tuyau flexible ayant une longueur d'au moins 10 mètres est alors nécessaire pour permettre d'en faire le tour.

D'autres solutions connues comme celle du modèle d'utilité DEU 20 2013 006358 ou de la demande de brevet EP 2 075 218 consistent à utiliser un fil chauffant à l'intérieur du flexible pour réchauffer l'additif à l'intérieur de ce dernier.

Cependant, cette solution ne permet pas de réchauffer le pistolet et nécessite en plus un radiateur complémentaire dans le compartiment hydraulique. De plus, cette solution empêche l'utilisation de dispositifs de rétraction tels un enrouleur à spirale car le rayon de courbure d'un tel flexible est limité. L'élément chauffant est fragile et peut casser.

D'autres solutions connues des demandes de brevets WO 2011/054400 et WO 2012/015685 utilisent un système de circulation du liquide dans un flexible coaxial comprenant deux canalisations dont une dédiée à un premier sens de circulation du liquide vers le pistolet et l'autre dédié à un deuxième sens de circulation inverse au premier pour le retour du liquide. Le liquide peut circuler en boucle grâce à une pompe ou retourner dans le réservoir de liquide. Ce dispositif, en plus de la pompe de recirculation, nécessite un dispositif réchauffant le liquide à l'intérieur du circuit de recirculation.

Ces solutions présentent l'inconvénient d'être complexes et onéreuses. La solution de la demande WO 2012/015685 ne permet pas de réchauffer le liquide contenu dans le pistolet. Une solution complémentaire est donc nécessaire. Quant à la demande WO 2011/054400, elle décrit un mode de réalisation dans lequel le liquide traverse le pistolet par une voie et retourne vers le flexible par une autre voie, la sortie du pistolet étant bouchée par un bouchon lorsque le pistolet est raccroché sur le support pistolet. Cependant, le risque de fuite est très élevé au niveau du bouchon.

La présente invention a pour objet de remédier à ces inconvénients.

A cet effet, l'invention fournit un distributeur de liquide pour véhicule et un procédé de fonctionnement d'un tel distributeur plus simple et moins onéreux que ceux de l'art antérieur comprenant un système de chauffage permettant de réchauffer à la fois le tuyau flexible et le pistolet avec un seul moyen de chauffage.

L'invention concerne un distributeur de liquide pour véhicule comprenant un circuit de distribution de liquide relié d'une part à un réservoir de liquide et d'autre part à un tuyau flexible connecté à un pistolet destiné à distribuer le liquide dans un réservoir du véhicule, ledit tuyau flexible comprenant deux conduits, sensiblement coaxiaux dont un premier conduit pour le transfert du liquide du circuit de distribution de liquide vers le pistolet lors de la livraison du liquide dans le réservoir du véhicule et un deuxième conduit s'étendant le long du premier conduit.

Selon l'invention, le distributeur de liquide comprend un système de chauffage destiné à générer un flux d'air chaud à travers le deuxième conduit du tuyau flexible de façon à réchauffer le liquide à l'intérieur du premier conduit du tuyau flexible.

On obtient ainsi un système de chauffage plus simple et moins onéreux que ceux de l'art antérieur utilisés pour la distribution d'AdBlue® permettant d'éviter d'utiliser une porte coulissante ou autres dispositifs pour isoler le pistolet et le flexible. Le système de chauffage est plus simple que ceux précités de l'art antérieur utilisant un circuit de recirculation de fluide comprenant une pompe, un élément chauffant et un circuit de recirculation complémentaire relié au réservoir de liquide. De plus, les risques de fuite sont éliminés car le fluide utilisé pour le réchauffage est de l'air chaud. Les systèmes à recirculation de liquide présentent en effet des risques de fuite d'AdBlue® dans le circuit de recirculation.

Selon un mode de réalisation particulier de l'invention, le pistolet comprend :
- une première canalisation comprenant une entrée reliée au premier conduit du tuyau flexible et une sortie par laquelle est distribué le liquide, et
- une deuxième canalisation longeant la première canalisation du pistolet et comprenant une entrée reliée au deuxième conduit du tuyau flexible et une sortie débouchant en amont de la sortie de la première canalisation du pistolet pour l'éjection du flux d'air chaud à l'extérieur de la deuxième canalisation du pistolet.

Ceci permet au système de chauffage de chauffer à la fois le tuyau flexible et le pistolet de façon simple.

Selon un autre mode de réalisation particulier de l'invention, le distributeur de liquide comprend un système de récupération de vapeurs destiné à récupérer les vapeurs émises par le liquide lors de sa distribution dans le réservoir du véhicule, ledit système de récupération de vapeurs comprenant un circuit de récupération de vapeurs relié d'une part à une pompe d'aspiration et d'autre part au deuxième conduit du tuyau flexible qui est relié à la deuxième canalisation du pistolet.

Le deuxième conduit du tuyau flexible et la deuxième canalisation du pistolet ont une double fonction qui est à la fois de permettre la circulation de l'air chaud suivant un premier sens de circulation et la circulation des vapeurs selon un deuxième sens de circulation opposé au premier. On obtient un ensemble système de chauffage et de récupération de vapeurs simple comprenant un nombre réduit de composants par rapport aux systèmes connus.

Selon un autre mode de réalisation particulier de l'invention :
- le système de chauffage comprend un moyen de chauffage relié au deuxième conduit du tuyau flexible au moyen d'un circuit d'air chaud et une première vanne pour fermer le circuit d'air chaud lorsque le système de récupération de vapeurs est activé ;
- le système de récupération de vapeurs comprend une deuxième vanne pour fermer le circuit de récupération de vapeurs lorsque le système de chauffage est activé, la vanne du système de chauffage étant ouverte.

Ceci permet d'isoler chacun des circuits. Lorsque le système de chauffage est activé, la deuxième vanne est fermée permettant d'isoler le circuit de récupération des vapeurs. Ceci permet d'empêcher le flux d'air chaud de circuler dans le circuit de récupération des vapeurs, évitant une perte de flux d'air chaud. De même, lorsque le système de récupération des vapeurs est activé, la première vanne est fermée, évitant une perte de charge en aspirant dans le circuit d'air chaud. Ceci permet également de sécuriser le distributeur. En effet, dans le cas d'un distributeur multi produits comprenant un module de distribution d'essence, les éventuelles vapeurs de carburant aspirées dans le circuit de récupération ne peuvent pas remonter par le circuit d'air chaud et pénétrer dans le compartiment électronique. Les risques d'explosions sont évités.

Dit autrement, lorsque le système de récupération des vapeurs n'est pas utilisé, la deuxième vanne est fermée. Lorsque le système de chauffage n'est pas utilisé, la première vanne est fermée. Lorsque le système de chauffage et le système de récupération des vapeurs ne sont pas utilisés, les deux vannes sont fermées.

Selon un autre mode de réalisation particulier de l'invention, le distributeur de liquide comprend un compartiment hydraulique dans lequel est logé le circuit de distribution de liquide, et un compartiment électronique adjacent au compartiment hydraulique et dans lequel est logé le moyen de chauffage, le circuit d'air chaud s'étendant du moyen de chauffage jusqu'au compartiment hydraulique en traversant une paroi étanche aux vapeurs disposée entre les compartiments hydraulique et électronique.

Le moyen de chauffage est ainsi disposé dans une zone sécurisée, étanche aux vapeurs, à l'eau et aux poussières. Il n'est pas nécessaire d'utiliser un moyen de chauffage satisfaisant aux directives ATEX 94/9/CE concernant les atmosphères explosibles, réduisant les coûts.

Selon un autre mode de réalisation particulier de l'invention, le deuxième conduit du tuyau flexible destiné au flux d'air chaud entoure le premier conduit destiné au transfert du liquide et comprend une entrée d'air chaud en communication fluidique avec le système de chauffage, ledit deuxième conduit ou un raccord reliant le tuyau flexible au pistolet comprenant une sortie d'air chaud en amont du pistolet pour l'éjection du flux d'air chaud à l'extérieur du tuyau flexible.

Ceci permet d'utiliser un pistolet classique sans deuxième canalisation fournissant un système de chauffage plus simple et moins cher.

L'invention concerne également un procédé mis en oeuvre lors du fonctionnement d'un distributeur de liquide tel que défini précédemment.

Le procédé comprend les étapes consistant à :
- mesurer la température (T) du liquide,
- détecter le raccrochage du pistolet sur le distributeur de liquide après une opération de remplissage, et
- si la température (T) est inférieure ou égale à une température de consigne (TC), commander la circulation d'un flux d'air chaud dans le circuit d'air chaud et dans le deuxième conduit du tuyau flexible selon une première direction (A) jusqu'au décrochage suivant du pistolet.

Selon un autre mode de réalisation particulier de l'invention, le distributeur de liquide comprend en outre d'une part un système de récupération des vapeurs émises lors du remplissage du réservoir d'un véhicule comprenant un circuit de récupération des vapeurs relié au deuxième conduit du tuyau flexible et d'autre part une première vanne montée sur le circuit d'air chaud pour permettre de fermer ce circuit, d'air chaud ainsi qu'une seconde vanne montée sur le circuit de récupération des vapeurs pour permettre de fermer ce circuit de récupération des vapeurs.

Le procédé mis en oeuvre lors du fonctionnement du distributeur de liquide comprend les étapes consistant à :
- détecter le décrochage du pistolet indiquant le début d'une opération de remplissage du réservoir d'un véhicule,
- fermer la première vanne et ouvrir la seconde vanne pour permettre la récupération des vapeurs émises lors de cette opération de remplissage,
- détecter le raccrochage du pistolet sur le distributeur de liquide indiquant l'achèvement de cette opération de remplissage, et
- fermer la seconde vanne et ouvrir la première vanne pour permettre de commander la circulation d'un flux d'air chaud dans le circuit d'air chaud si la température (T) du liquide est inférieure ou égale à la température de consigne (TC).

Selon un autre mode de réalisation particulier de l'invention, la fermeture de la seconde vanne et l'arrêt de l'opération de récupération de vapeurs, après la détection du raccrochage du pistolet sur le distributeur de liquide, ne sont effectuées qu'après une temporisation pendant un temps t.

Cette temporisation permet de s'assurer que toutes les vapeurs d'ammoniac ont bien été aspirées dans le pistolet, le tuyau flexible et le conduit d'air/vapeur avant l'introduction d'air chaud.

Les avantages découlant du distributeur de liquide s'appliquent également au procédé mettant en oeuvre ce dispositif.

Les caractéristiques de l'invention seront décrites plus en détail en se référant aux dessins annexés dans lesquels :
- la figure 1 est une vue en perspective représentant un distributeur d'additif' AdBlue® de l'art antérieur ;
- la figure 2 est une vue en perspective représentant un distributeur de liquide selon l'invention ;
- la figure 3 est une vue en perspective représentant l'intérieur du distributeur de liquide selon un mode de réalisation possible,
- la figure 4 est une vue en coupe représentant schématiquement le système de chauffage, le système de récupération de vapeur, le circuit de distribution de liquide, le tuyau flexible et le pistolet ;
- la figure 5 représente une coupe du tuyau flexible dans lequel les premier et deuxième conduits sont coaxiaux ;
- la figure 6 représente une vue en coupe d'un connecteur de flexible ;
- la figure 7 représente un mode de réalisation particulier dans lequel le moyen de chauffage comprend deux pare-flammes ;
- la figure 8 représente une vue en coupe d'un pistolet raccroché sur un support pistolet selon un premier mode de réalisation possible;
- la figure 9 représente une vue en coupe d'un pistolet selon un deuxième mode de réalisation possible :
- la figure 10 représente une vue en coupe d'un pistolet selon un troisième mode de réalisation.

La figure 1 représente un distributeur 1 d'AdBlue® de l'art antérieur comprenant un compartiment hydraulique 28 dans lequel est logé un circuit de distribution de liquide relié d'une part à un réservoir d'Ablue® et d'autre part à un tuyau flexible lui-même relié à un pistolet pour distribuer l'AdBlue® (non représentés). Le distributeur 1 comprend un compartiment électronique 29 dans lequel sont logés des composants électroniques tels qu'un calculateur convertissant les impulsions d'un mesureur de débit de liquide en volume et un afficheur. Le distributeur 1 comprend un compartiment de stockage 31 du tuyau flexible et du pistolet. Le pistolet est isolé de l'extérieur par une porte coulissante 32. Le compartiment de stockage 31 est fermé par un élément d'isolation inférieur 33 muni de brosses pour isoler le compartiment de stockage 31. Le compartiment hydraulique 28 est équipé d'un radiateur pour réchauffer l'additif AdBlue® (non représenté).

Comme dit précédemment, cette solution de l'art antérieur présente des inconvénients.

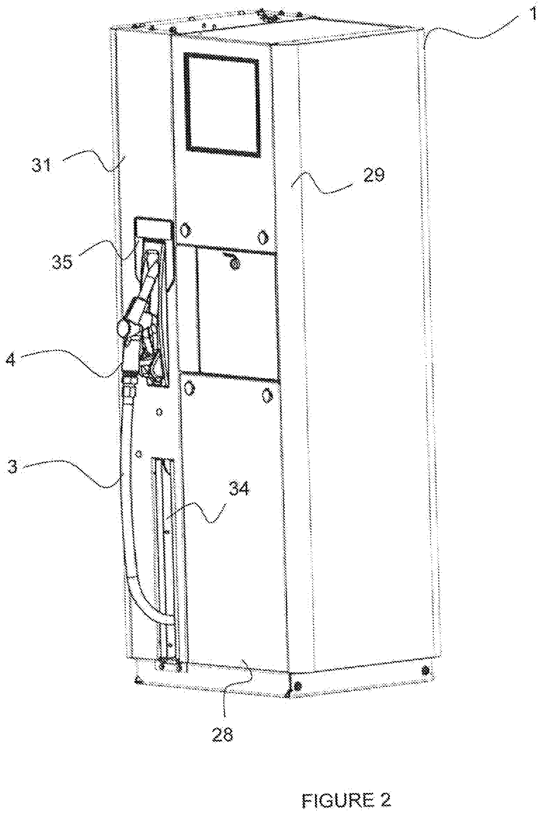

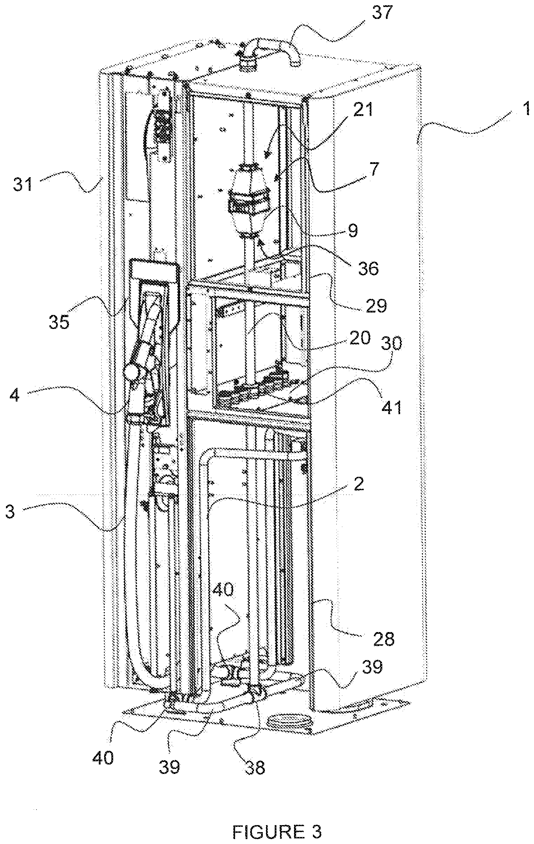

La figure 2 est une vue en perspective représentant un distributeur de liquide 1 selon l'invention et la figure 3 est une vue en perspective représentant l'intérieur du distributeur de liquide 1. Les modes de réalisation ci-dessous décrivent comme exemple un distributeur de liquide 1 utilisé pour distribuer un liquide à base d'urée tel l'AdBlue®. Le distributeur peut également être utilisé pour distribuer d'autres liquides à base d'urée et d'autres liquides de composition différente tels du produit lave-glace susceptibles de geler en dessous de 0°C.

Le distributeur de liquide 1 représenté est un distributeur mono produit. Le distributeur de liquide 1 peut également être intégré dans un distributeur multi produits délivrant du gasoil et de l'essence sans plomb.

Le distributeur de liquide 1 des figures 2 et 3 comprend un compartiment hydraulique 28 dans lequel est logé un circuit de distribution de liquide 2 relié d'une part à un réservoir d'AbBlue® (non représenté) et d'autre part à un tuyau flexible 3 lui-même relié à un pistolet 4 pour distribuer l'AdBlue®. Le réservoir d'AdBlue® peut être positionné dans le compartiment hydraulique 28 ou à l'extérieur du distributeur. Le circuit de distribution de liquide 2 comprend un mesureur de débit (non représenté) disposé à l'intérieur du compartiment hydraulique 28 et permettant de mesurer le volume de liquide distribué.

Le distributeur de liquide 1 comprend un compartiment électronique 29 dans lequel sont logés des composants électroniques tels qu'un calculateur convertissant les impulsions du mesureur de débit en litrse et un afficheur. Le distributeur de liquide 1 comprend un compartiment de stockage 31 du tuyau flexible 3 et du pistolet 4. Le compartiment de stockage 31 comprend une fente 34 permettant au tuyau flexible 3 de ressortir du compartiment hydraulique 28 et un support de pistolet 35 sur lequel le pistolet 4 est raccroché lorsque l'opération de distribution de fluide dans le réservoir du véhicule est terminée.

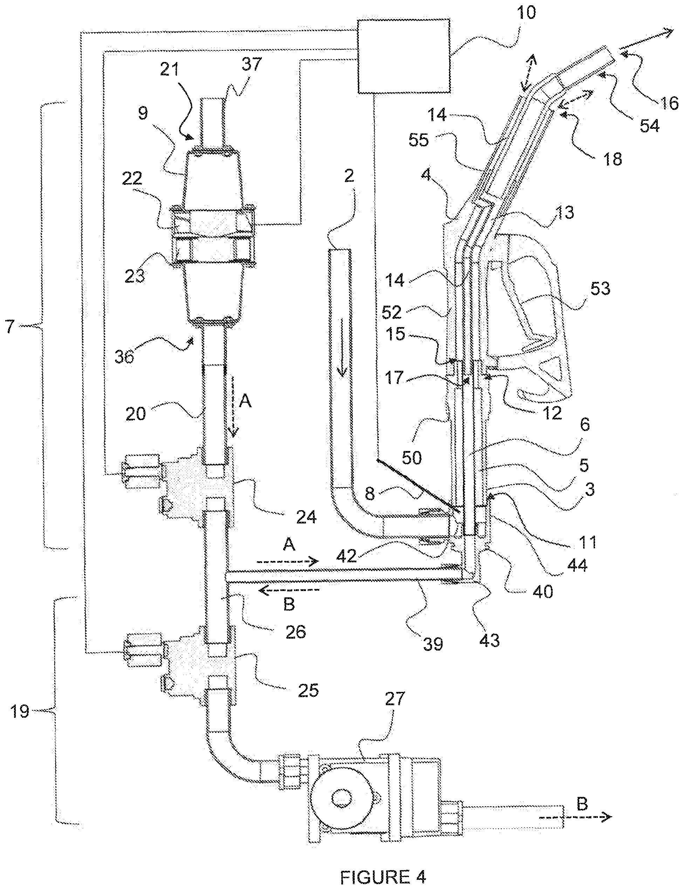

Comme représenté sur la figure 4, le tuyau flexible 3 comprend deux conduits 5, 6 dont un premier conduit 5 pour le transfert du liquide du circuit de distribution de liquide 2 vers le pistolet 4 lors de la livraison du liquide dans le réservoir du véhicule et un deuxième conduit 6 s'étendant le long du premier conduit 5. De préférence, le deuxième conduit 6 s'étend sur toute la longueur du premier conduit 5.

La figure 4 représente un tuyau flexible 3 de petite longueur par rapport au pistolet 4 pour simplifier la représentation. Le tuyau flexible 3 présente en réalité une longueur bien supérieure, d'au moins deux mètres par exemple.

Le distributeur de liquide comprend un système de chauffage 7 destiné à générer un flux d'air chaud à travers le deuxième conduit 6 du tuyau flexible 4 de façon à réchauffer le liquide à l'intérieur du premier conduit 5 du tuyau flexible 3.

Le premier conduit 5 du tuyau flexible 3 présente un diamètre de 40 mm et le deuxième conduit 6 du tuyau flexible 4 présente un diamètre de 10 mm par exemple. D'autres diamètres sont possibles, du moment que l'air chaud peut circuler le long du tuyau flexible.

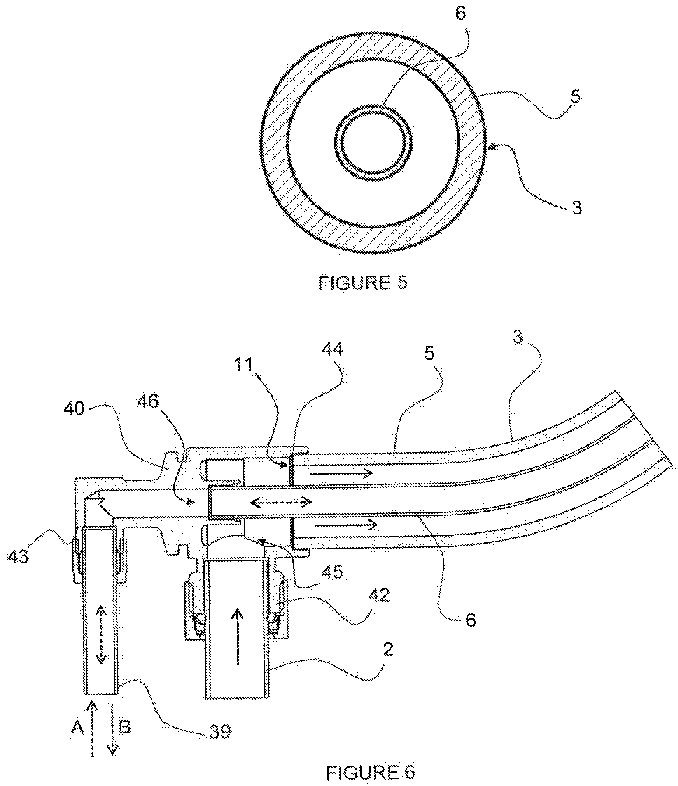

Les figures 4 et 5 représentent un mode de réalisation possible dans lequel les premier 5 et deuxième 6 conduits sont sensiblement coaxiaux. Sur l'exemple des figures 4 et 5, le deuxième conduit 6 qui est associé au transfert de l'air chaud est disposé à l'intérieur du premier conduit 5 qui est destiné au transfert du liquide de façon à former un passage de liquide annulaire entre les deux conduits.

Alternativement, les deux conduits 5, 6 peuvent être inversés. Le premier conduit 5 pour le liquide peut être disposé à l'intérieur du deuxième conduit 6 d'air chaud.

On entend par « sensiblement coaxiaux » le fait que les premier 5 et deuxième 6 conduits peuvent être exactement coaxiaux lorsque les axes centraux respectifs des conduits sont confondus et également non exactement coaxiaux lorsque les axes centraux des conduits sont décalés.

Comme représenté sur la figure 4, le système de chauffage 7 comprend un capteur de température 8 mesurant la température T du liquide et un dispositif de contrôle 10 activant le moyen de chauffage 9 lorsque le capteur de température 8 a détecté une température T inférieure ou égale à une température critique Tc. La température critique Tc est supérieure à -7°C. Elle est de préférence de -5°C correspondant à la température à partir de laquelle l'AdBlue® cristallise.

Le capteur de température 8 peut être disposé sur le connecteur de tuyau flexible 40 par exemple et être en contact ou non avec le liquide. Il est de préférence en contact avec le liquide. D'autres positions sont possibles pour le capteur de température 8 qui peut être disposé dans le circuit de distribution de fluide 2.

Comme représenté sur la figure 3, le moyen de chauffage 9 est disposé à l'intérieur du compartiment électronique 29 qui est une zone non explosible. L'intérêt est qu'il n'est pas nécessaire d'utiliser un moyen de chauffage 9 répondant aux directives ATEK 94/9/CE concernant les atmosphères explosibles.

Alternativement, le moyen de chauffage 9 peut être disposé dans le compartiment hydraulique 28 ou le compartiment de stockage du flexible 31. Le moyen de chauffage 9 peut être disposé également à l'extérieur du distributeur de liquide 1 à proximité ou éloigné de ce dernier. Le moyen de chauffage 9 peut être également commun à plusieurs distributeurs de liquide 1.

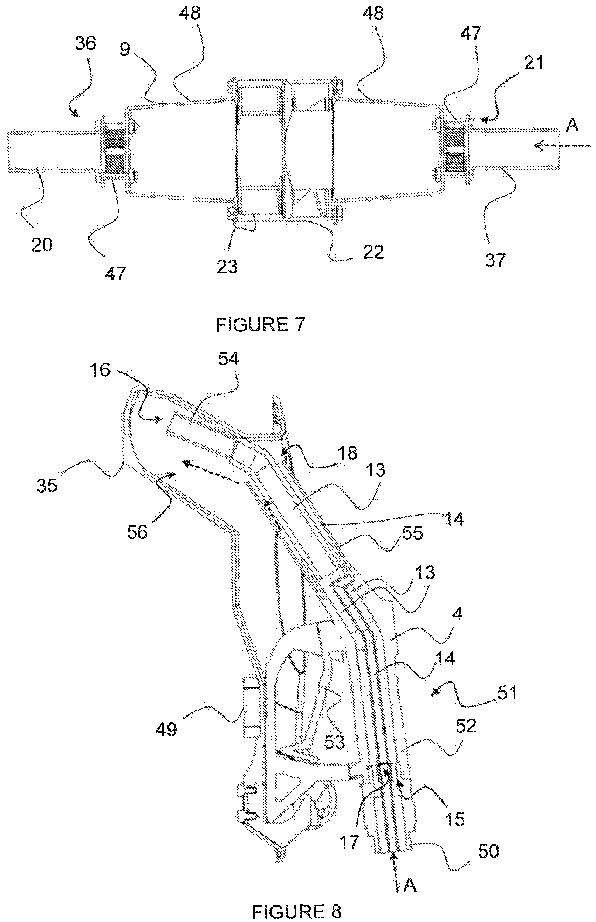

Le moyen de chauffage 9 présente une sortie 36 qui est reliée au deuxième conduit 6 du tuyau flexible au moyen d'un circuit d'air chaud 20. Le moyen de chauffage 9 comprend une entrée d'air frais 21 reliée à l'extérieur du distributeur au moyen d'un conduit supérieur 37, un ventilateur 22 pour aspirer l'air frais, et un élément chauffant 23 réchauffant l'air frais pour produire le flux d'air chaud, comme représenté sur les figures 4 et 7. Le moyen de chauffage 9 génère un flux d'air chaud pressurisé dans le deuxième conduit 6. L'air frais est aspiré à l'extérieur du compartiment électronique 29 pour éviter une dépression à l'intérieur de ce dernier qui est étanche à l'eau et aux poussières. L'élément chauffant 23 est une résistance chauffante. Le moyen de chauffage 9 comprend deux déflecteurs 48 pour canaliser l'air. Le circuit d'air chaud 20 peut comprendre des tuyaux ayant un diamètre compris entre 20 mm et 60 mm, de préférence de 40 mm.

La figure 7 représente un mode de réalisation particulier dans lequel le moyen de chauffage 9 comprend un pare-flamme 47 à son entrée 21 et un pare-flamme 47 à sa sortie, afin de stopper d'éventuelles flammes provenant du tuyau flexible 3. Ces pare-flammes 47 sont particulièrement utiles lorsque le distributeur de liquide 1 à base d'AdBlue® est intégré dans un distributeur multi-produits comprenant un module délivrant de l'essence sans plomb. Des vapeurs de carburant sont susceptibles de se dégager lors de la distribution d'essence. Si les vapeurs sont aspirées dans le moyen de chauffage 9, il y a un risque d'explosion. Les vapeurs de carburant pénétrant dans le moyen de chauffage 9 sont susceptibles de s'enflammer. Les pare-flammes 47 permettent d'éliminer ce risque en stoppant la propagation de la flamme. De préférence, le moyen de chauffage 9 comprend un seul pare-flamme 47 à sa sortie.

La puissance du moyen de chauffage 9 est d'au moins 250 watts. Elle peut être de 2 kilowatts par exemple.

Selon un autre mode de réalisation, le moyen de chauffage 9 peut être un dispositif de puits canadien comprenant une partie de canalisation d'air chaud enterrée dans le sol à une profondeur d'au moins un mètre. L'hiver, le sol présente une température qui est en générale plus élevée que l'air ambiant. Par exemple, si la température du sol est de 6°C et que l'air est de -7°C, cette température de sol suffit à réchauffer la canalisation d'air chaud puis le tuyau flexible et le pistolet. Un ventilateur est prévu pour souffler l'air chaud.

Le circuit d'air chaud 20 s'étend du moyen de chauffage 9 jusqu'au compartiment hydraulique 28 en traversant une paroi étanche 30 aux vapeurs d'AdBlue® et d'essence disposée entre les compartiments hydraulique 28 et électroniques 29. Par exemple, cette paroi étanche 30 aux vapeurs appelée barrière vapeur comprend une plaque percée de trous et dans lesquels sont insérés des joints d'étanchéité 41 de type presse-étoupe, assurant l'étanchéité autour du circuit d'air chaud 20 et des câbles électriques non représentés traversant la paroi étanche 30. La paroi étanche 30 empêche les vapeurs de liquide de remonter du compartiment hydraulique 28 vers le compartiment électronique 29. Elle est définie selon la norme EN13617.1. La paroi étanche 30 de la figure 3 forme une barrière vapeur de type 1 et doit respecter un degré d'étanchéité à l'eau et aux poussières au moins IP67 selon la norme EN60529. D'autres variantes de barrière vapeurs sont également possibles comme des barrières vapeurs de type II comprenant une zone de ventilation.

Le compartiment hydraulique 28 est entouré de parois isolées thermiquement. La partie du circuit d'air chaud 20 qui traverse le compartiment hydraulique 28 permet de réchauffer ce compartiment par rayonnement thermique. En variante, un radiateur complémentaire peut être éventuellement disposé dans le compartiment hydraulique 28 pour réchauffer le circuit de distribution de liquide 2.

Sur la figure 3, le distributeur de liquide 1 comprend deux côtés de distribution associés chacun à un mesureur, un tuyau flexible et un pistolet. Le circuit d'air chaud 20 est relié à l'entrée d'un connecteur trois voies 38 qui répartit le flux d'air chaud des deux côtés du distributeur de liquide 1. Chacune des deux sorties du connecteur trois voies 38 est reliée à un conduit d'air/vapeur 39 relié à un connecteur de tuyau flexible 40.

Le connecteur de tuyau flexible 40 est représenté en détail sur la figure 6. Il présente trois voies dont une entrée de liquide 42 connectée au circuit de distribution de liquide 2, une entrée d'air chaud 43 connectée au conduit d'air/vapeur 39 et une sortie air/liquide 44 connectée au tuyau flexible 3. Le connecteur de tuyau flexible 40 comprend un chemin de liquide 45 reliant le circuit de distribution de liquide 2 à l'intérieur du premier conduit 5 du tuyau flexible et un chemin d'air chaud 46 reliant le conduit d'air/vapeur 39 au deuxième conduit 6 du tuyau flexible. Ces deux chemins 45, 46 ou canaux sont agencés pour être étanches l'un par rapport à l'autre.

Alternativement, l'entrée de liquide 42 et entrée d'air chaud 43 du connecteur de tuyau flexible 40 peuvent être inversées dans le cas où le premier conduit 5 du tuyau flexible est à l'intérieur du deuxième conduit 6 du tuyau flexible.

Selon un mode de réalisation possible, le deuxième conduit 6 destiné au flux d'air chaud entoure le premier conduit 5 destiné au transfert du liquide. Le deuxième conduit 6 comprend une entrée d'air chaud 11 en communication fluidique avec le système de chauffage 7 et une sortie d'air chaud en amont du pistolet 4 pour l'éjection du flux d'air chaud à l'extérieur du deuxième conduit 6 du tuyau flexible. Autrement dit, le deuxième conduit 6 débouche à l'extérieur du tuyau flexible 3 au voisinage de l'entrée du pistolet.

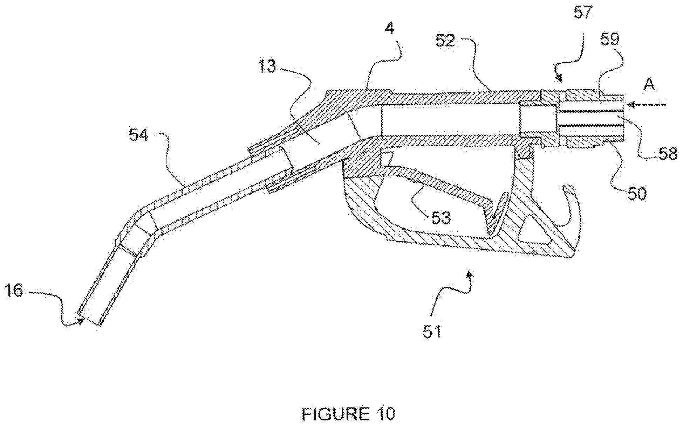

En variante et comme représenté sur la figure 10, le raccord 50 reliant le pistolet 4 au tuyau flexible 3 comprend une première canalisation 58 reliée au premier conduit 5 du tuyau flexible 3 pour la circulation du liquide et une deuxième canalisation 59 reliée au deuxième conduit 6 du tuyau flexible 3 pour la circulation de l'air chaud. L'air chaud circule dans le deuxième conduit 6 du tuyau flexible 3 selon une direction A, puis dans la deuxième canalisation 59 du raccord 50 et est éjecté à l'extérieur vers le pistolet 4 à travers la sortie d'air chaud 57. Une partie du flux d'air chaud réchauffe l'extérieur du pistolet. Une partie de l'énergie thermique est également transmise au pistolet par conduction au travers du connecteur reliant le tuyau flexible 3 au pistolet 4. La sortie d'air chaud 57 de la figure 10 présente une forme annulaire. Elle peut être formée d'un seul orifice ou d'une multitude de petits orifices. L'avantage d'une sortie d'air chaud 57 disposée sur le raccord 50 au lieu du tuyau flexible 3 est que l'on peut utiliser un tuyau flexible classiquement destiné à la récupération des vapeurs de carburant.

L'air chaud généré par le moyen de chauffage est transmis dans le circuit d'air chaud 20 puis dans le deuxième conduit 6 du tuyau flexible 3 qui est extérieur au premier conduit 5. Le flux d'air chaud circule sur toute la longueur du tuyau flexible 3 pour réchauffer le liquide à l'intérieur du premier conduit 5 et jusqu'à l'entrée du pistolet, évitant la cristallisation de l'AdBlue® lorsque la température externe est en dessous de -5°C.

Selon un procédé de fonctionnement possible du distributeur de liquide, le flux d'air est généré en continu lorsque le pistolet 4 est raccroché sur le support de pistolet 35 et lors de l'opération de distribution du liquide. Dans ce mode de réalisation, la génération du flux d'air chaud peut être activée lorsque la température critique Tc est détectée ou en continu quel que soit la température du fluide, évitant l'utilisation d'un capteur de température et d'un système de contrôle. Par exemple, la génération d'air chaud peut être activée automatiquement ou manuellement à certaine période de l'année, plus froide, et/ou aux heures les plus froides de la journée.

Selon un procédé de fonctionnement préféré du distributeur de liquide, l'air chaud est soufflé ou pulsé dans le deuxième conduit 6 du tuyau flexible 3 par le moyen de chauffage 9 lorsque la température du liquide T mesurée par un capteur de température 8 est inférieure ou égale à une température de consigne Tc. Le dispositif de contrôle 10 active alors le moyen de chauffage 9.

De préférence, le procédé comprend une étape de détection du pistolet 4 sur le support pistolet 35 entre l'étape de distribution du liquide et l'étape de génération du flux d'air chaud. Le flux d'air chaud est généré si la présence du pistolet 4 sur le support pistolet 35 est détectée par un détecteur 49 disposé sur le support pistolet 35, comme illustré figure 8. Le détecteur 49 peut être par exemple un capteur magnétique (commutateur magnétique par exemple) détectant la présence d'un aimant prévu sur le pistolet.

Ainsi, le flux d'air chaud est transmis seulement lorsque le pistolet 4 est raccroché sur le support pistolet 35 et lorsque la température T mesurée est inférieure ou égale à la température de consigne Tc. Une temporisation peut être prévue entre la détection du raccrochage du pistolet 4 et la génération du flux d'air chaud pendant un temps t compris entre 1s et 60s. La température du flux d'air chaud est d'au moins 5°C dans le deuxième conduit 6 du tuyau flexible.

Selon une autre variante représentée sur les figures 4 et 8, le pistolet 4 est raccordé au tuyau flexible 3 par un raccord 50 et comprend une première canalisation 13 comprenant une entrée 15 reliée au premier conduit 5 du tuyau flexible par l'intermédiaire du raccord 50 et une sortie 16 par laquelle est distribué le liquide.

Le pistolet 4 comprend une deuxième canalisation 14 longeant la première canalisation 13 du pistolet. La deuxième canalisation 14 comprend une entrée 17 reliée au deuxième conduit 6 du tuyau flexible par l'intermédiaire du raccord 50 et une sortie 18 débouchant en amont de la sortie 16 de la première canalisation 13 du pistolet pour l'éjection du flux d'air chaud à l'extérieur de la deuxième canalisation 14 du pistolet. La première 13 et la deuxième 14 canalisations sont coaxiales.

Autrement dit, le deuxième conduit 6 débouche à l'extérieur du tuyau flexible au voisinage de la sortie 16 du pistolet. L'air chaud circule dans le deuxième conduit 6 du tuyau flexible 3 selon une direction A et est éjecté vers la sortie 16 du pistolet 4 de façon à réchauffer le liquide à l'intérieur du tuyau flexible 3 et du pistolet 4.

L'air chaud généré par le moyen de chauffage 9 est transmis dans le circuit d'air chaud 20 selon une direction A puis dans le deuxième conduit 6 du tuyau flexible 3 qui est à l'intérieur au premier conduit 5. Le flux d'air chaud circule sur toute la longueur du tuyau flexible 3 pour réchauffer le liquide à l'intérieur du premier conduit 5 et dans la deuxième canalisation 14 du pistolet 4 jusqu'à la sortie 18 de la deuxième canalisation 14, évitant au liquide AdBlue® de cristalliser à la fois dans le tuyau flexible 3 et le pistolet 4.

Le pistolet de la figure 8 comprend un corps de pistolet 51 muni d'une poignée 52 et d'une gâchette 53 contrôlant le débit de fluide. Le pistolet comprend également une buse 54. Au niveau du corps de pistolet 51, la première canalisation 13 du pistolet 4 entoure la deuxième canalisation 14 du pistolet 4. A partir de la buse 54, c'est la deuxième canalisation 14 qui entoure la première canalisation 13 du pistolet 4. La buse 54 est entourée d'une collerette 55 de forme tubulaire délimitant la deuxième canalisation 14 du pistolet 4. La collerette 55 ne se prolonge pas jusqu'à la sortie 16 de la première canalisation 13 du pistolet 4.

Le pistolet 4 est supporté sur un support pistolet 35 lorsqu'il est raccroché sur la distributeur. La buse 54 du pistolet est logée à l'intérieur d'une cavité 56. Une partie du flux d'air est éjecté dans cette cavité 56, permettant d'optimiser le réchauffement du pistolet 4. L'air chaud circule partiellement dans la cavité 56 pour réchauffer la buse 54.

En variante, le support de pistolet 35 comprend un cache ou une enveloppe fixé sur sa partie supérieure de façon à recouvrir le pistolet lorsqu'il est dans le support pistolet. Ce cache peut être souple ou rigide et permet de garder une partie du flux d'air chaud à l'intérieur de la cavité 56 et donc de l'isoler.

En variante, le support de pistolet comprend un orifice de récupération de l'air chaud dans la cavité 56 qui est relié au compartiment hydraulique au moyen d'une canalisation débouchant dans le compartiment hydraulique de façon à réchauffer le compartiment hydraulique par le flux d'air chaud. L'orifice peut être délimité par une collerette remontant jusqu'à la sortie 18 de la deuxième canalisation 14 du pistolet de façon à ce que la buse 54 du pistolet soit insérée à l'intérieur de la collerette lorsque le pistolet est raccroché. Ceci permet de limiter les pertes de flux d'air.

Ce type de pistolet est connu car utilisé pour les systèmes de récupération de vapeur pour la distribution d'essence. Pour la distribution d'AdBlue® le pistolet est en matière résistante à l'AdBlue®. Le pistolet est de préférence en plastique.

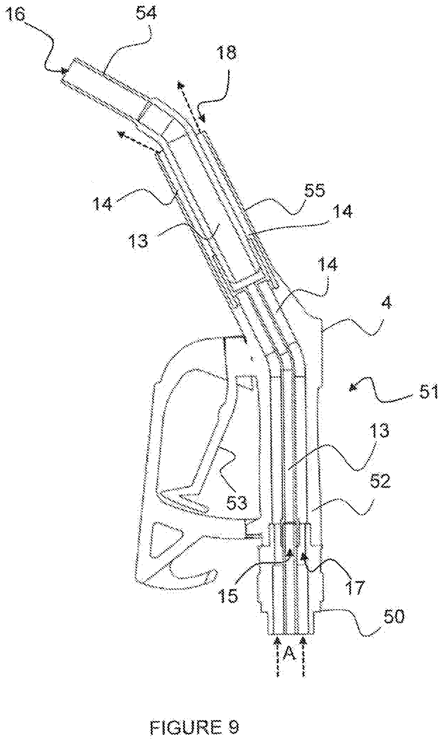

La figure 9 représente une autre variante de pistolet 4 dans laquelle les canalisations 13, 14 sont inversées. Le pistolet 4 comprend une première canalisation 13 dédiée au liquide comprenant une entrée 15 reliée au premier conduit 5 du tuyau flexible et une sortie 16 par laquelle est distribué le liquide. Le premier conduit 5 du tuyau flexible est dans ce cas à l'intérieur du deuxième conduit 6.

Le pistolet 4 comprend une deuxième canalisation 14 longeant la première canalisation 13 du pistolet. La deuxième canalisation 14 comprend une entrée 17 reliée au deuxième conduit 6 du tuyau flexible par l'intermédiaire du raccord 50 et une sortie 18 débouchant en amont de la sortie 16 de la première canalisation 13 du pistolet pour l'éjection du flux d'air chaud à l'extérieur de la deuxième canalisation 14 du pistolet. La première 13 et la deuxième 14 canalisations sont sensiblement coaxiales.

Autrement dit, la deuxième canalisation 14 du pistolet 4 débouche à l'extérieur du tuyau flexible au voisinage de la sortie 16 du pistolet. L'air chaud circule dans le deuxième conduit 6 du tuyau flexible 3 selon une direction A et est éjecté vers la sortie 16 du pistolet 4 de façon à réchauffer le liquide à l'intérieur du tuyau flexible 3 et du pistolet 4.

L'air chaud généré par le moyen de chauffage est transmis dans le circuit d'air chaud 20 selon la direction A puis dans le deuxième conduit 6 du tuyau flexible 3 qui est à l'extérieur au premier conduit 5. Le flux d'air chaud circule sur toute la longueur du tuyau flexible 3 pour réchauffer le liquide à l'intérieur du premier conduit 5 et dans la deuxième canalisation 14 du pistolet 4 jusqu'à la sortie 18 de la deuxième canalisation 14, évitant au liquide AdBlue® de cristalliser à la fois dans le tuyau flexible 3 et le pistolet 4.

Selon la variante de la figure 9, le pistolet comprend un corps de pistolet 51 muni d'une poignée 52 et d'une gâchette 53 contrôlant le débit de fluide. Le pistolet comprend également une buse 54. Au niveau du corps de pistolet 51 et de la buse 54, la première canalisation 13 du pistolet 4 est entourée par la deuxième canalisation 14 du pistolet 4. La buse 54 est entourée d'une collerette 55 délimitant la deuxième canalisation 14 du pistolet 4. La collerette 55 ne se prolonge pas jusqu'à la sortie 16 de la première canalisation 13 du pistolet 4.

Selon un mode de réalisation préféré et représenté sur la figure 4, le distributeur de liquide 1 comprend un système de récupération de vapeurs 19 destiné à récupérer les vapeurs émises par le liquide lors de sa distribution dans le réservoir du véhicule. Le système de récupération de vapeurs 19 comprend un circuit de récupération de vapeurs 26 relié d'une part à une pompe d'aspiration 27 et d'autre part au deuxième conduit 6 du tuyau flexible qui est relié à la deuxième canalisation 14 du pistolet. Plus précisément, le circuit de récupération de vapeurs 26 est relié au conduit d'air/vapeur 39 qui est lui-même relié au connecteur de tuyau flexible 40. Le conduit d'air/vapeur 39 est un conduit commun à travers lequel circule le flux d'air chaud selon la direction A lorsque le système de chauffage est activé et à travers lequel circule le flux de vapeur aspiré selon la direction B lorsque le système de récupération de vapeurs 19 est activé. La direction A est opposée à direction B.

En variante, le conduit d'air/vapeur 39 peut être supprimé. Le circuit de récupération de vapeurs 26 et le circuit d'air chaud 20 peuvent être reliés directement au connecteur de tuyau flexible 40 qui comprend alors quatre entrée/sortie dont une entrée de liquide, une entrée d'air chaud, une sortie de vapeur et une sortie de liquide / air.

De manière préférée et comme illustré sur la figure 4, le système de chauffage 7 comprend une première vanne 24 pour fermer le circuit d'air chaud 20 lorsque le système de récupération de vapeurs 19 est activé. Et le système de récupération de vapeurs 19 comprend une deuxième vanne 25 pour fermer le circuit de récupération de vapeurs 26 lorsque le système de chauffage 7 est activé, la première vanne 24 du système de chauffage 7 étant ouverte.

La première vanne 24 est disposée entre le moyen de chauffage 9 et le conduit d'air/vapeur 39. La deuxième vanne 25 est disposée entre la pompe d'aspiration 27 et le conduit d'air/vapeur 39.

Les première 24 et deuxième 25 vannes sont des vannes commandées par le dispositif de contrôle 10. Les première 24 et deuxième 25 vannes peuvent être des vannes électriques ou pneumatiques par exemple. Les première 24 et deuxième 25 vannes peuvent être des vannes solénoïdes en tout ou rien de préférence ou des vannes proportionnelles.

De préférence, la sortie de la pompe d'aspiration 27 est reliée à l'atmosphère. Les vapeurs d'ammoniac sont rejetées directement à l'atmosphère. La deuxième 25 vanne est alors une vanne solénoïde en tout ou rien étant donné qu'il n'est pas nécessaire de récupérer les vapeurs d'ammoniac dans le réservoir d'AdBlue®. Il n'y a donc pas besoin d'utiliser une vanne proportionnelle pour adapter le flux de vapeurs aspirées en fonction du débit de liquide AdBlue® délivré.

En variante, il est possible d'utiliser une seule vanne à trois voies au lieu de deux vannes. La vanne à trois voies comprend une entrée d'air chaud reliée au circuit d'air chaud pouvant être ouverte ou fermée, une sortie de vapeur reliée au circuit de récupération de vapeurs pouvant être ouverte ou fermée et une entrée d'air chaud/sortie de vapeur reliée au tuyau flexible.

L'invention concerne également un procédé de fonctionnement d'un distributeur de liquide tel que défini ci-dessus.

Lorsque l'utilisateur décroche le pistolet 4 du support pistolet 35 pour remplir le réservoir de son véhicule d'AdBlue®, le détecteur 49 de position détecte le décrochage et transmets l'information au dispositif de contrôle 10. Ce dernier transmet un signal à la première vanne 24 pour actionner sa fermeture et un signal à la deuxième vanne 25 pour activer son ouverture. Le dispositif de contrôle 10 transmet également un signal au moyen de chauffage 9 pour l'arrêter s'il est activé et un signal à la pompe d'aspiration 27 pour l'actionner afin d'aspirer les vapeurs d'ammoniac diffusées lors de la distribution d'AdBlue®.

Les vapeurs d'ammoniac sont aspirées selon la direction B du pistolet 4 vers la pompe d'aspiration 27. Comme illustré sur la figure 4, les vapeurs d'ammoniac sont aspirées à l'intérieur de la collerette 55 de la buse 54 du pistolet à travers la sortie 18 de la deuxième canalisation 14 du pistolet. Les vapeurs d'ammoniac traversent ensuite la deuxième canalisation 14 de la buse 54 jusqu'au corps du pistolet 51. dans lequel la deuxième canalisation 14 est à l'intérieur et au centre de la première canalisation 13 du pistolet.

Les vapeurs d'ammoniac traversent le raccord 50 puis le deuxième conduit 6 du tuyau flexible 4 qui est en communication fluidique avec la deuxième canalisation 14 du pistolet. Le deuxième conduit 6 est à l'intérieur et au centre du premier conduit 5 du tuyau flexible 3.

Les vapeurs d'ammoniac traversent le connecteur de tuyau flexible 40, le conduit d'air/vapeur 39, le circuit de récupération de vapeurs 26 puis la pompe de récupération de vapeurs 27. Les vapeurs d'ammoniac sont ensuite relâchées dans l'atmosphère.

En variante, il peut être prévu de récupérer les vapeurs d'ammoniac pour les remettre dans le réservoir d'AdBlue.

Lorsque l'utilisateur a terminé le remplissage du réservoir AdBlue® de son véhicule, la distribution de fluide s'arrête et il raccroche le pistolet 4 sur le support pistolet 35. Le détecteur 49 détecte la présence du pistolet 4 et envoie un signal au dispositif de contrôle 10 qui transmet un signal à la pompe d'aspiration 27 pour l'arrêter et un signal à la deuxième vanne 25 pour activer sa fermeture.

De préférence, une temporisation permet de retarder la fermeture de la deuxième vanne 25 et l'arrêt de la pompe d'aspiration 27 pendant un temps t. Le temps t est compris entre 1 seconde et 1 minute. Il est de préférence de 5 secondes.

Cette temporisation permet de s'assurer que toutes les vapeurs d'ammoniac ont bien été aspirées dans le pistolet 4, le tuyau flexible 3 et le conduit d'air/vapeur 39 avant l'introduction d'air chaud.

Après la fermeture de la deuxième vanne 25 et l'arrêt de la pompe d'aspiration 27, lorsque le capteur de température 8 détecte une température inférieure à -5°C, le dispositif de contrôle 10 transmet un signal à la première vanne 24 du circuit de chauffage pour actionner son ouverture et un signal au moyen de chauffage 9 pour l'activer. De l'air frais est aspiré depuis une zone non dangereuse à l'extérieur du distributeur d'AdBlue® par le ventilateur 22 du moyen de chauffage 9 et est réchauffé par l'élément chauffant 23 produisant un flux d'air chaud sous pression à travers le circuit d'air chaud 20 selon la direction A. Le flux d'air chaud traverse ensuite le conduit d'air/vapeur 39, le connecteur de tuyau flexible 40, le deuxième conduit 6 du tuyau flexible 4, la deuxième canalisation 14 du pistolet pour ressortir à l'air libre par la sortie 18.

Le flux d'air chaud permet ainsi de réchauffer l'AdBlue®, lorsque la distribution est arrêtée, à l'intérieur du premier conduit 5 du tuyau flexible 3 et à l'intérieur de la première canalisation 13 du pistolet 4 évitant ainsi à l'AdBlue® de cristalliser.

Selon un mode de réalisation particulier concernant un distributeur multi produits comprenant un module de distribution de liquide à base d'urée et au moins un module de distribution de carburant, le flux d'air chaud est arrêté lorsqu'un module de distribution de carburant délivre du carburant. Ceci permet d'optimiser la sécurité et d'éviter les risques d'explosion.

Le procédé ci-dessus s'applique également au mode de réalisation de la figure 9 dans lequel la deuxième canalisation 14 du pistolet entoure la première canalisation 13 du pistolet et dans lequel le deuxième conduit 6 du tuyau flexible 4 entoure le premier conduit 5 du tuyau flexible 4.

## Revendications

1. Distributeur de liquide (1) pour véhicule comprenant un circuit de distribution de liquide (2) relié d'une part à un réservoir de liquide et d'autre part à un tuyau flexible (3) connecté à un pistolet (4) destiné à distribuer le liquide dans un réservoir du véhicule, ledit tuyau flexible (3) comprenant deux conduits (5, 6) sensiblement coaxiaux dont un premier conduit (5) pour le transfert du liquide du circuit de distribution de liquide (2) vers le pistolet (4) lors de la livraison du liquide dans le réservoir du véhicule et un deuxième conduit (6) s'étendant le long du premier conduit (5),
**caractérisé en ce qu'**il comprend :
- un système de chauffage (7) destiné à générer un flux d'air chaud à travers le deuxième conduit (6) du tuyau flexible (3) de façon à réchauffer le liquide à l'intérieur du premier conduit (5) du tuyau flexible (3).

2. Distributeur de liquide (1) selon la revendication 1,
**caractérisé en ce que** le pistolet (4) comprend:
- une première canalisation (13) comprenant une entrée (15) reliée au premier conduit (5) du tuyau flexible et une sortie (16) par laquelle est distribué le liquide, et
- une deuxième canalisation (14) longeant la première canalisation (13) du pistolet et comprenant une entrée (17) reliée au deuxième conduit (6) du tuyau flexible et une sortie (18) débouchant en amont de la sortie (16) de la première canalisation (13) du pistolet pour l'éjection du flux d'air chaud à l'extérieur de la deuxième canalisation (14) du pistolet.

3. Distributeur de liquide (1) selon la revendication 2, **caractérisé en ce qu'**il comprend un système de récupération de vapeurs (19) destiné à récupérer les vapeurs émises par le liquide lors de sa distribution dans le réservoir du véhicule, ledit système de récupération de vapeurs (19) comprenant un circuit de récupération de vapeurs (26) relié d'une part à une pompe d'aspiration (27) et d'autre part au deuxième conduit (6) du tuyau flexible qui est relié à la deuxième canalisation (14) du pistolet.

4. Distributeur de liquide (1) selon la revendication 3, **caractérisé en ce que** :
- le système de chauffage (7) comprend un moyen de chauffage (9) relié au deuxième conduit (6) du tuyau flexible au moyen d'un circuit d'air chaud (20) et une première vanne (24) pour fermer le circuit d'air chaud (20) lorsque le système de récupération de vapeurs (19) est activé,
- le système de récupération de vapeurs (19) comprend une deuxième vanne (25) pour fermer le circuit de récupération de vapeurs (26) lorsque le système de chauffage (7) est activé, la vanne (24) du système de chauffage (7) étant ouverte.

5. Distributeur de liquide (1) selon l'une quelconque des revendications 1 à 4, **caractérisé en ce qu'**il comprend un compartiment hydraulique (28) dans lequel est logé le circuit de distribution de liquide (2), et un compartiment électronique (29) adjacent au compartiment hydraulique (28) et dans lequel est logé le moyen de chauffage (9), le circuit d'air chaud (20) s'étendant du moyen de chauffage (9) jusqu'au compartiment hydraulique (28) en traversant une paroi étanche (30) aux vapeurs disposée entre les compartiments hydraulique (28) et électronique (29).

6. Distributeur de liquide (1) selon la revendication 1, **caractérisé en ce que** le deuxième conduit (6) du tuyau flexible destiné au flux d'air chaud entoure le premier conduit (5) destiné au transfert du liquide et comprend une entrée d'air chaud (11) en communication fluidique avec le système de chauffage (7), ledit deuxième conduit (6) ou un raccord (50) reliant le tuyau flexible (3) au pistolet (4) comprenant une sortie d'air chaud (57) en amont du pistolet (4) pour l'éjection du flux d'air chaud à l'extérieur du tuyau flexible.

7. Procédé mis en oeuvre lors du fonctionnement d'un distributeur de liquide tel que défini selon l'une quelconque des revendications 1 à 6, ce distributeur de liquide comprenant d'une part un circuit de distribution de liquide (2) relié à un réservoir de liquide et à un tuyau flexible (3) connecté à un pistolet (4) permettant de distribuer le liquide dans le réservoir d'un véhicule et d'autre part un système de chauffage (7) de ce liquide au moyen d'air chaud comprenant un circuit d'air chaud (20) relié au tuyau flexible (3), ce tuyau flexible (3) comprenant deux conduits (5, 6) sensiblement coaxiaux à savoir un premier conduit relié au circuit de distribution de liquide (2) et un second conduit relié au circuit d'air chaud (20),
**caractérisé en ce qu'**il comprend les étapes consistant à :
- mesurer la température (T) du liquide,
- détecter le raccrochage du pistolet (4) sur le distributeur de liquide après une opération de remplissage, et
- si la température (T) est inférieure ou égale à une température de consigne (TC), commander la circulation d'un flux d'air chaud dans le circuit d'air chaud (20) et dans le deuxième conduit (6) du tuyau flexible (3) selon une première direction (A) jusqu'au décrochage suivant du pistolet (4).

8. Procédé selon la revendication 7, le distributeur de liquide comprenant en outre d'une part un système de récupération (19) des vapeurs émises lors du remplissage du réservoir d'un véhicule comprenant un circuit de récupération des vapeurs (26) relié au deuxième conduit (6) du tuyau flexible (3) et d'autre part une première vanne (24) montée sur le circuit d'air chaud (20) pour permettre de fermer ce circuit d'air chaud (20) ainsi qu'une seconde vanne (25) montée sur le circuit de récupération des vapeurs (19) pour permettre de fermer ce circuit de récupération des vapeurs,
**caractérisé en ce qu'**il comprend les étapes consistant à :
- détecter le décrochage du pistolet (4) indiquant le début d'une opération de remplissage du réservoir d'un véhicule,
- fermer la première vanne (24) et ouvrir la seconde vanne (25) pour permettre la récupération des vapeurs émises lors de cette opération de remplissage,
- détecter le raccrochage du pistolet (4) sur le distributeur de liquide indiquant l'achèvement de cette opération de remplissage, et
- fermer la seconde vanne (25) et ouvrir la première vanne (24) pour permettre de commander la circulation d'un flux d'air chaud dans le circuit d'air chaud (20) si la température (T) du liquide est inférieure ou égale à la température de consigne (TC).

9. Procédé selon la revendication 8, **caractérisé en ce que** la fermeture de la seconde vanne (25) et l'arrêt de l'opération de récupération de vapeurs, après la détection du raccrochage du pistolet (4) sur le distributeur de liquide, ne sont effectuées qu'après une temporisation pendant un temps t.

## Patentansprüche

1. Flüssigkeitsspender (1) für ein Fahrzeug, mit einem Flüssigkeitsverteilkreis (2), der einerseits mit einem Flüssigkeitstank und andererseits mit einem an eine zum Einfüllen der Flüssigkeit in einen Tank des Fahrzeugs bestimmte Zapfpistole (4) angeschlossenen flexiblen Schlauch (3) verbunden ist, wobei der flexible Schlauch (3) zwei im Wesentlichen koaxiale Leitungen (5, 6) aufweist, und zwar eine erste Leitung (5) für den Transport der Flüssigkeit vom Flüssigkeitsverteilkreis (2) zur Zapfpistole (4) beim Einfüllen der Flüssigkeit in den Tank des Fahrzeugs und eine sich entlang der ersten Leitung (5) erstreckende zweite Leitung (6), **dadurch gekennzeichnet, daß** er
- ein Heizsystem (7) aufweist, das dazu bestimmt ist, einen Strom warmer Luft durch die zweite Leitung (6) des flexiblen Schlauchs (3) zu erzeugen, um die Flüssigkeit im Inneren der ersten Leitung (5) des flexiblen Schlauchs (3) zu erwärmen.

2. Flüssigkeitsspender (1) gemäß Anspruch 1, **dadurch gekennzeichnet, daß** die Zapfpistole (4)
- einen ersten Kanal (13), der einen mit der ersten Leitung (5) des flexiblen Schlauchs verbundenen Eingang (15) und einen Ausgang (16), durch den die Flüssigkeit abgegeben wird, aufweist, und
- einen zweiten Kanal (14), der sich entlang des ersten Kanals (13) der Zapfpistole erstreckt und einen mit der zweiten Leitung (6) des flexiblen Schlauchs verbundenen Eingang (17) und einen Ausgang (18), der stromaufwärts vom Ausgang (16) des ersten Kanals (13) der Zapfpistole zum Auslassen des Stroms warmer Luft nach außerhalb des zweiten Kanals (14) der Zapfpistole aufweist,
aufweist.

3. Flüssigkeitsspender (1) gemäß Anspruch 2, **dadurch gekennzeichnet, daß** er ein Auffangsystem für Dämpfe (19) aufweist, das dazu bestimmt ist, die von der Flüssigkeit bei deren Abfüllen in den Tank des Fahrzeugs freigesetzten Dämpfe aufzufangen, wobei das Auffangsystem für Dämpfe (19) einen Auffangkreis für Dämpfe (26) aufweist, der einerseits mit einer Ansaugpumpe (27) und andererseits mit der zweiten Leitung (6) des flexiblen Schlauchs, die mit dem zweiten Kanal (14) der Zapfpistole verbunden ist, verbunden ist.

4. Flüssigkeitsspender (1) gemäß Anspruch 3, **dadurch gekennzeichnet, daß**
- das Heizsystem (7) ein Heizmittel (9) aufweist, das mit der zweiten Leitung (6) des flexiblen Schlauchs mittels eines Warmluftkreises (20) und eines ersten Ventils (24) zum Absperren des Warmluftkreises (20), wenn das Auffangsystem für Dämpfe (19) aktiviert ist, verbunden ist,
- das Auffangsystem für Dämpfe (19) ein zweites Ventil (25) zum Absperren des Auffangkreises für Dämpfe (26), wenn das Heizsystem (7) aktiviert ist, aufweist, wobei das Ventil (24) des Heizsystems (7) offen ist.

5. Flüssigkeitsspender (1) gemäß einem der Ansprüche 1 bis 4, **dadurch gekennzeichnet, daß** er ein Hydraulikabteil (28), in dem der Flüssigkeitsverteilkreis (2) untergebracht ist, und ein an das Hydraulikabteil (28) angrenzendes Elektronikabteil (29), in dem das Heizmittel (9) untergebracht ist, aufweist, wobei sich der Warmluftkreis (20) vom Heizmittel (9) bis zum Hydraulikabteil (28) erstreckt und dabei eine dampfdichte Wandung (30) durchquert, die zwischen dem Hydraulikabteil (28) und dem Elektronikabteil (29) angeordnet ist.

6. Flüssigkeitsspender (1) gemäß Anspruch 1, **dadurch gekennzeichnet, daß** die für den Strom warmer Luft bestimmte zweite Leitung (6) des flexiblen Schlauchs die für den Transport der Flüssigkeit bestimmte erste Leitung (5) umgibt und einen mit dem Heizsystem (7) in fluidischer Verbindung stehenden Warmlufteingang (11) aufweist, wobei die zweite Leitung (6) oder ein den flexiblen Schlauch (3) mit der Zapfpistole (4) verbindender Anschluß (50) einen stromaufwärts von der Zapfpistole (4) liegenden Wannluftausgang (57) zum Auslassen des Stroms warmer Luft nach außerhalb des flexiblen Schlauchs aufweist.

7. Verfahren, das beim Betrieb eines gemäß einem der Ansprüche 1 bis 6 definierten Flüssigkeitsspenders durchgeführt wird, wobei der Flüssigkeitsspender einerseits einen Flüssigkeitsverteilkreis (2), der mit einem Flüssigkeitstank und mit einem an eine zum Einfüllen der Flüssigkeit in den Tank des Fahrzeugs bestimmte Zapfpistole (4) angeschlossenen flexiblen Schlauch (3) verbunden ist, und andererseits ein einen mit dem flexiblen Schlauch (3) verbundenen Warmluftkreis (20) aufweisendes System (7) zum Erwärmen dieser Flüssigkeit mittels warmer Luft, aufweist, wobei der flexible Schlauch (3) zwei im Wesentlichen koaxiale Leitungen (5, 6) aufweist, und zwar eine mit dem Flüssigkeitsverteilkreis (2) verbundene erste Leitung und eine mit dem Warmluftkreis (20) verbundene zweite Leitung,
**dadurch gekennzeichnet, daß** es die Schritte aufweist, die darin bestehen,
- die Temperatur (T) der Flüssigkeit zu messen,
- das Einhängen der Zapfpistole (4) in den Flüssigkeitsspender nach einem Abfüllvorgang zu erfassen,
- wenn die Temperatur (T) kleiner als oder gleich einer vorgegebenen Temperatur (TC) ist, das Fließen eines Warmluftstroms im Warmluftkreis (20) und in der zweiten Leitung (6) des flexiblen Schlauchs (3) in einer ersten Richtung (A) bis zum nächsten Abnehmen der Zapfpistole (4) zu steuern.

8. Verfahren gemäß Anspruch 7, wobei der Flüssigkeitsspender außerdem einerseits ein Auffangsystem (19) für beim Füllen des Tanks des Fahrzeugs freigesetzte Dämpfe aufweist, das einen mit der zweiten Leitung (6) des flexiblen Schlauchs (3) verbundenen Auffangkreis für Dämpfe (26) aufweist, und andererseits ein im Warmluftkreis (20) installiertes erstes Ventil (24), um ein Absperren des Warmluftkreises (20) zu ermöglichen, und ein im Auffangkreis für Dämpfe (19) installiertes zweites Ventil (25), um ein Absperren des Auffangkreises für Dämpfe (19) zu ermöglichen, aufweist, **dadurch gekennzeichnet, daß** es die Schritte aufweist, die darin bestehen,
- das Abnehmen der Zapfpistole (4), das den Anfang eines Vorgangs des Füllens des Tanks eines Fahrzeugs anzeigt, zu erfassen,
- das erste Ventil (24) zu schließen und das zweite Ventil (25) zu öffnen, um ein Auffangen der beim Füllvorgang freigesetzten Dämpfe zu ermöglichen,
- das Einhängen der Zapfpistole am Flüssigkeitsspender, das das Ende des Vorgangs des Füllens anzeigt, zu erfassen, und
- das zweite Ventil (25) zu schließen und das erste Ventil (24) zu öffnen, um zu ermöglichen, das Fließen eines Warmluftstroms im Warmluftkreis (20) zu steuern, wenn die Temperatur (T) der Flüssigkeit kleiner als oder gleich einer vorgegebenen Temperatur (TC) ist.

9. Verfahren gemäß Anspruch 8, **dadurch gekennzeichnet, daß** das Schließen des zweiten Ventils (25) und das Beenden des Vorgangs des Auffangens von Dämpfen nach dem Erfassen des Einhängens der Zapfpistole (4) am Flüssigkeitsspender erst nach einer Verzögerung um eine Zeitspanne t ausgeführt werden.

## Claims

1. A liquid dispenser (1) for vehicle comprising a liquid dispensing circuit (2) connected, on the one hand, to a liquid tank, and on the other hand, to a flexible hose (3) connected to a nozzle (4) intended to dispense the liquid into a tank of the vehicle, said flexible hose (3) comprising two substantially coaxial lines (5, 6), including a first line (5) for the transfer of the liquid from the liquid dispensing circuit (2) to the nozzle (4) during the delivery of the liquid into the tank of the vehicle and a second line (6) extending along the first line (5),
**characterized in that** it comprises:
- a heating system (7) intended to generate a flow of hot air through the second line (6) of the flexible hose (3) so as to heat the liquid inside the first line (5) of the flexible hose (3).

2. The liquid dispenser (1) according to claim 1,
**characterized in that** the nozzle (4) comprises:
- a first duct (13) comprising an inlet (15) connected to the first line (5) of the flexible hose and an outlet (16) through which the liquid is dispensed, and
- a second duct (14) running along the first duct (13) of the nozzle and comprising an inlet (17) connected to the second line (6) of the flexible hose and an outlet (18) opening upstream from the outlet (16) of the first duct (13) of the nozzle for the ejection of the flow of hot air out of the second duct (14) of the nozzle.

3. The liquid dispenser (1) according to claim 2, **characterized in that** it comprises a vapour collection system (19) intended to collect the vapours emitted by the liquid during its dispensing into the tank of the vehicle, said vapour collection system (19) comprising a vapour collection circuit (26) connected, on the one hand, to a suction pump (27), and on the other hand, to the second line (6) of the flexible hose that is connected to the second duct (14) of the nozzle.

4. The liquid dispenser (1) according to claim 3, **characterized in that**:
- the heating system (7) comprises a heating means (9) connected to the second line (6) of the flexible hose by means of a hot air circuit (20) and a first valve (24) for closing the hot air circuit (20) when the vapour collection system (19) is activated,
- the vapour collection system (19) comprises a second valve (25) to close the vapour collection circuit (26) when the heating system (7) is activated, the valve (24) of the heating system (7) being open.

5. The liquid dispenser (1) according to any one of claims 1 to 4, **characterized in that** it comprises a hydraulic compartment (28) in which is housed the liquid dispensing circuit (2), and an electronic compartment (29) adjacent to the hydraulic compartment (28) and in which is housed the heating means (9), the hot air circuit (20) extending from the heating means (9) to the hydraulic compartment (28) by passing through a vapour-tight wall (30) arranged between the hydraulic (28) and electronic (29) compartments.

6. The liquid dispenser (1) according to claim 1, **characterized in that** the second line (6) of the flexible hose intended to the flow of hot air surrounds the first line (5) intended for the transfer of the liquid and comprises a hot air inlet (11) in fluidic communication with the heating system (7), said second line (6) or a connector (50) connecting the flexible hose (3) to the nozzle (4) comprising a hot air outlet (57) upstream from the nozzle (4) for the ejection of the flow of hot air outside the flexible hose.

7. A method implemented during the operation of a liquid dispenser as defined according to any one of claims 1 to 6, said liquid dispenser comprising, on the one hand, a liquid dispensing circuit (2) connected to a liquid tank and to a flexible hose (3) connected to a nozzle (4) for dispensing the liquid into the tank of a vehicle, and on the other hand, a system (7) for heating this liquid by means of hot air comprising a hot air circuit (20) connected to the flexible hose (3), this flexible hose (3) comprising two substantially coaxial lines (5, 6), i.e. a first line connected to the liquid dispensing circuit (2) and a second line connected to the hot air circuit (20),
**characterized in that** it comprises the following steps:
- measuring the temperature (T) of the liquid,
- detecting the hanging up of the nozzle (4) onto the liquid dispenser after a filling operation, and
- if the temperature (T) is lower than or equal to a setpoint temperature (TC), controlling the circulation of the flow of hot air in the hot air circuit (20) and in the second line (6) of the flexible hose (3) in a first direction (A) until the following picking up of the nozzle (4).

8. The method according to claim 7, the liquid dispenser further comprising, on the one hand, a system (19) for collecting the vapours emitted during the filling of the tank of a vehicle comprising a vapour collection circuit (26) connected to the second line (6) of the flexible hose (3), and on the other hand, a first valve (24) mounted on the hot air circuit (20) for allowing the closure of this hot air circuit (20) as well as a second valve (25) mounted on the vapour collection circuit (19) for allowing the closure of this vapour collection circuit,
**characterized in that** it comprises the steps consisting in:
- detecting the picking up of the nozzle (4) indicating the beginning of an operation of filling of the tank of a vehicle,
- closing the first valve (24) and opening the second valve (25) for allowing the collection of the vapours emitted during this filling operation,
- detecting the hanging up of the nozzle (4) onto the liquid dispenser, indicating the completion of this filling operation, and
- closing the second valve (25) and opening the first valve (24) to allow controlling the circulation of a flow of hot air in the hot air circuit (20) if the temperature (T) of the liquid is lower than or equal to the setpoint temperature (TC).

9. The method according to claim 8, **characterized in that** the closure of the second valve (25) and the stopping of the vapour collection operation, after detection of the hanging up of the nozzle (4) onto the liquid dispenser, are performed only after a time out of time t.
